# EUROPÄISCHE PATENTSCHRIFT

(11) **EP 1 386 129 B1**
(45) Veröffentlichungstag und Bekanntmachung des Hinweises auf die Patenterteilung: **15.09.2004**
(21) Anmeldenummer: 01274215.1
(22) Anmeldetag: 27.10.2001
(51) Int. Cl.: G01L 19/06, H05H 5/02, B01D 39/20

(54) **GERÄT MIT EINEM EIN HYDROPHOBES ODER HYDROPHOBISIERTES NANOPORIGES MATERIAL ENTHALTENDEM FEUCHTFILTER**
DEVICE COMPRISING A WET FILTER CONTAINING A HYDROPHOBIC OR HYDROPHOBICIZED NANOPOROUS MATERIAL
APPAREIL COMPORTANT UN FILTRE HUMIDE CONTENANT UN MATERIAU NANOPOREUX HYDROPHOBE OU RENDU HYDROPHOBE

(30) Priorität: 09.05.2001 DE 10122511
(43) Veröffentlichungstag der Anmeldung: 04.02.2004
(73) Patentinhaber: Endress + Hauser GmbH + Co. KG., 79689 Maulburg (DE)
(72) Erfinder: HEGNER, Frank, 79540 Lörrach (DE); ROSSBERG, Andreas, 79713 Bad Säckingen (DE); SCHMIDT, Elke, 79650 Schopfheim (DE); DREWES, Ulfert, 79379 Müllheim (DE); WALTER, Bernhard, 89278 Nersingen (DE); KIRST, Michael, 79112 Freiburg (DE)
(74) Vertreter: Andres, Angelika
(86) Internationale Anmeldenummer: PCT/EP2001/012469
(87) Internationale Veröffentlichungsnummer: WO 2002/090916

(56) Entgegenhaltungen:
- EP-A- 0 974 825
- EP-A- 1 070 948
- WO-A-98/11974
- WO-A-99/64504
- DE-A- 19 833 247
- GB-A- 2 014 868

## Beschreibung

Die Erfindung betrifft allgemein Gehäuse oder Geräte mit feuchteempfindlichen Komponenten. Dies können beispielsweise Gehäuse mit feuchteempfindlichen elektronischen Schaltungen oder Meßgeräte mit feuchteempfindlichen Sensoren sein, hierzu gehören insbesondere Relativdrucksensoren.

Mit Relativdrucksensoren lassen sich Drücke von Medien, z.B. von Flüssigkeiten, Gasen oder Dämpfen gegenüber dem gerade herrschenden Atmosphären- oder Umgebungsdruck messen, wobei also dieser Atmosphären- oder Umgebungsdruck als Referenzdruck dient. Hierbei erweist sich die Feuchtigkeit der Referenzluft als Problem, da die Feuchtigkeit über eine Referenzdruckleitung in den Sensor eindringen und bei Temperaturen unterhalb des Taupunkts auskondensieren kann. Es gibt daher vielfältige Bemühungen, das Eindringen der Feuchtigkeit in den Sensor zu verhindern.

Die japanische Patentanmeldung Nr. 07110364 offenbart beispielsweise einen kapazitiven Relativdrucksensor mit einem Grundkörper und einer Membran, die entlang ihres Randbereichs unter Bildung einer Referenzdruckkammer druckdicht mit dem Grundkörper verbunden ist. Die Referenzluft wird durch eine Referenzdruckleitung und eine Bohrung, in die Referenzdruckkammer eingeleitet. In der Referenzdruckleitung ist ein Wasserabsorber angeordnet, der die Referenzluft trocknen soll.

Diese Lösung ist insofern unbefriedigend, als die Feuchtigkeit im Absorber angereichert wird. Wenn nun der Absorber gesättigt ist, oder bei Erhöhung der Temperatur wieder einen Teil des gebundenen Wasser desorbieren läßt, dann gelangt Feuchtigkeit in den Sensor.

Die europäische Patentanmeldung mit der Veröffentlichungsnummer 974 825 A2 verfolgt einen anderen Lösungsansatz. Der Aufbau des Relativdrucksensors ist allgemein wie zuvor, wobei anstelle des Absorbers ein hydrophobes Filterelement eingesetzt wird, welches auf einer Temperatur gehalten ist, die innerhalb des Sensors nicht mehr unterschritten wird und vorzugsweise deutlich kälter ist als die Temperaturen im Inneren des Sensors. Auf diese Weise kondensiert Feuchtigkeit am Filterelement aus, wenn die Filtertemperatur den Taupunkt der wärmeren Umgebungsluft unterschreitet. Die in das Innere des Sensors gelangende Luft hat somit nur einen Wassergehalt, der einer relativen Luftfeuchtigkeit von 100% bei der Filtertemperatur entspricht. Da aber die Filtertemperatur innerhalb des Sensors nie unterschritten wird und meistens sogar oberhalb der Filtertemperatur liegt, kann es nicht zu einer Kondensation der Feuchtigkeit im Inneren des Sensors kommen, denn der Taupunkt wird nicht erreicht.

Die erforderliche Kühlung des Filterelements wird beispielsweise bei Sensoren für die Lebensmittelindustrie dadurch erzielt, daß das Filterelement über das Sensorgehäuse im thermischen Kontakt zu dem kalten Prozeßmedium gehalten wird. Die beschriebene Vorrichtung ist insofern vorteilhaft, als die bei einem Absorber auftretenden Sättigungsprobleme nicht vorkommen.

Andererseits ergeben sich aus der erforderlichen Kontrolle der Temperatur des Filterelements erhebliche konstruktive Einschränkungen, die für manche Anwendungen nicht akzeptabel sind.

Außerdem unterliegt der Anwender Einschränkungen für den Betrieb und die Wartung der Druckmeßvorrichtung. Wenn beispielsweise bei Reinigungsprozeduren das Filterelement auf Temperaturen erwärmt würde, die oberhalb der normalen Betriebstemperatur im Inneren des Sensors liegen, dann könnte Luft mit erhöhter Feuchtigkeit in den Sensor eindringen, die anschließend bei normaler Betriebstemperatur kondensieren könnte.

Die oben beschriebenen Filterelemente oder Absorber sind aus ähnlichen Gründen ungeeignet als Feuchtefilter bzw. Absorber für andere Geräte mit feuchteempfindlichen Komponenten, die einen Gasaustausch mit der Umgebungsluft beispielsweise zur Kühlung oder zum Druckausgleich erfordern, insbesondere dann, wenn im Einsatz Schwankungen der Umgebungstemperatur und damit einhergehende Schwankungen der relativen Luftfeuchtigkeit zu erwarten sind. Solche feuchteempfindlichen Komponenten können beispielsweise elektronische Schaltungen sein.

Der vorliegenden Erfindung liegt daher die Aufgabe zugrunde eine Vorrichtung mit einem Filterelement bereitzustellen, welche die beschriebenen Probleme überwindet.

Die Aufgabe wird erfindungsgemäß gelöst durch den Relativdrucksensor gemäß des unabhängigen Patentanspruchs 1 sowie die Vorrichtung gemäß des unabhängigen Patentanspruchs 8. Weitere Vorteile und Gesichtspunkte der Erfindung ergeben sich aus den abhängigen Ansprüchen, der Beschreibung und den Zeichnungen.

Die erfindungsgemäße Vorrichtung umfaßt ein Gehäuse, das in seinem Inneren eine Kammer definiert, welche mindestens eine Öffnung aufweist, durch welche die Kammer über einen Gasaustauschpfad mit der Umgebung des Gehäuses in Fließverbindung steht; und ein Filterelement, welches in dem Gasaustauschpfad angeordnet ist, wobei das Filterelement ein hydrophobes oder hydrophobiertes nanoporiges Material mit einem mittleren Porendurchmesser unter 4 nm aufweist.

In einer besonders bevorzugten Ausführungsform der erfindungsgemäßen Vorrichtung weist die Kammer eine Einlaßöffnung und eine Auslaßöffnung auf, durch welche die Kammer über jeweils einen Gasaustauschpfad mit der Umgebung des Gehäuses in Fließverbindung steht, wobei in beiden Gasaustauschpfaden jeweils ein Filterelement angeordnet ist, wobei das Filterelement ein hydrophobes bzw. hydrophobiertes nanoporiges Material aufweist.

Die Vorrichtung ist insbesondere als Elektronikgehäuse einsetzbar. Mit einem üblichen Gebläse kann ggf. ein Luftstrom durch die Kammer geführt werden, wodurch ein effektiver Wärmeaustausch ermöglicht wird.

Der erfindungsgemäße Relativdrucksensor zum Erfassen eines Meßdrucks bezogen auf einen Referenzdruck umfaßt
ein Sensorelement mit
einem Grundkörper und
einer Meßmembran, die entlang ihres Randbereichs unter Bildung einer Referenzdruckkammer druckdicht mit dem Grundkörper verbunden ist, wobei
die Meßmembran eine erste Membranfläche aufweist, die von der Referenzdruckkammer abgewandt und mit dem Meßdruck beaufschlagbar ist, und eine zweite Membranfläche, die der Referenzdruckkammer zugewandt ist;
einen Referenzdruckpfad, der sich zwischen einer Oberfläche, die mit dem Referenzdruck beaufschlagbar ist, und einer Öffnung in der Referenzdruckkammer erstreckt, wodurch die zweite Membranfläche mit dem Referenzdruck beaufschlagbar ist; und
ein Filterelement, welches in dem Referenzdruckpfad angeordnet ist;
dadurch gekennzeichnet, daß das Filterelement ein hydrophobes und/oder hydrophobiertes nanoporiges Materialmit einem mittleren Porendurchmesser unter 4 nm umfaßt.

Das nanoporige Material ist vorzugsweise als Schicht auf einem porösen Trägermaterial angeordnet, bzw. in der Matrix eines porösen Trägermaterials eingebettet, wobei das Trägermaterial insbesondere zur Gewährleistung der erforderlichen mechanischen Stabilität dient.

Das nanoporige Material umfaßt vorzugsweise ein anorganisches Material, insbesondere ein keramisches Material, wobei Al₂O₃ oder TiO₂ bevorzugt sind. Ebenfalls grundsätzlich geeignet sind ZrO₂, SiO₂, Alumosilikate, Alumoberylsilikate; Apatit, Cordierit, Mullit, Zeolith, SiC und Si₃N₄, Kohlenstoff, Vycor Glas und ihre Mischungen.

Der Begriff "nanoporig" bezeichnet hier eine Porengrößenverteilung, deren Maximum, bezogen auf die Porenhäufigkeit, bei einem Porendurchmesser unter 4 nm, vorzugsweise unter 2,5 nm, weiter bevorzugt zwischen 0,4 und 2 nm, noch weiter bevorzugt zwischen 0,5 und 1,5 nm und besonders bevorzugt zwischen 0,7 und 1 nm liegt. In einem besonders bevorzugten Ausführungsbeispiel liegt das Verteilungsmaximum bei etwa 0,9 nm.

Mit dem bevorzugten Herstellungsprozeß nach dem Sol-Gel-Verfahren kann eine hinreichend schmale Porengrößenverteilung erzielt werden, die eine gleichmäßige Filterwirkung gewährleistet. Der maximale Porendurchmesser sollte vorzugsweise nicht mehr als 10 nm weiter bevorzugt nicht mehr als 5 nm noch weiter bevorzugt nicht mehr als 2 nm betragen.

In der Filtrationstechnik sind zur Beschreibung von Schichten mit Porengrößen im Bereich von Nanometern auch die Begriffe mikroporös und mesoporös gebräuchlich. Demnach weisen so genannte mesoporöse Schichten Porendurchmesser zwischen 2 nm und 50 nm und so genannte mikroporöse Schichten Porendurchmesser unter 2 nm auf. Im Sinne dieser Definition ist das in der Erfindung verwendete nanoporige Material im mikroporösen Bereich bzw. am unteren Ende des mesoporösen Bereichs anzuordnen. Im folgenden wird weiterhin der Begriff "nanoporig" im Zusammenhang mit den erfindungsgemäß eingesetzten Materialien verwendet.

Die Schichtdicke des nanoporigen Materials kann jeweils der angestrebten Filterwirkung angepaßt werden, die von der Porengrößenverteilung und den hydrophoben Eigenschaften abhängt. Die Schicht muß hinreichend dick ausgebildet sein, damit keine Defekte im Material vorhanden sind, die die Filterwirkung gefährden würden.

Andererseits empfiehlt es sich, die nanoporige Schicht so dünn wie möglich vorzusehen, um den Strömungswiderstand für die durchzulassenden Gase, beispielsweise N₂ oder O₂ zu minimieren. Schließlich ist die Fläche des Filterelements so auszulegen, daß bei dem aufgrund der erforderlichen Filterwirkung vorliegenden Strömungswiderstand pro Flächeneinheit ein hinreichend schnellen Druckausgleich durch das Filterelement bei Druckstößen erfolgen kann.

Typische Leitfähigkeiten für gasförmige Medien liegen bei Filterelementen mit nanoporigen Schichten bei etwa 20 bis 800 mm³/(cm² s bar), vorzugsweise bei 20 bis 200 mm³/(cm² s bar).

Die Schichtdicke des nanoporigen Materials beträgt vorzugsweise mindestens 20 nm weiter bevorzugt mindestens 40 nm und besonders bevorzugt mindestens 80 nm. Die Schichtdicke des nanoporigen Materials beträgt vorzugsweise nicht mehr als 4 µm, weiter bevorzugt nicht mehr als 2 µm, noch weiter bevorzugt nicht mehr als 1 µm und besonders bevorzugt nicht mehr als 0,5 µm.

Das Trägermaterial für die nanoporige Schicht sollte insbesondere bei Anwendungen mit großen Temperaturschwankungen vorzugsweise das gleiche Wärmeausdehnungsverhalten wie das Filtermaterial aufweisen, um die mechanische Beanspruchung des Filtermaterials zu minimieren. Diese Anforderung ist jedoch mit abnehmender Schichtdicke des nanoporigen Materials von geringerer Bedeutung.

Es sind ebenfalls Schichtsysteme mit zwei, drei oder mehr chemisch und/oder morphologisch unterschiedlichen Schichten zur Umsetzung der Erfindung geeignet. Bevorzugt sind hierbei solche Schichtsysteme, bei denen Schichten mit abgestuften Porengrößen aufeinander folgen, wobei die Schichtsysteme mindestens eine Schicht aus nanoporigem Material aufweisen.

In einer bevorzugten Gruppe von Filterelementen weisen diese eine Schichtstruktur mit einer nanoporigen Schicht aus TiO₂ mit einer mittleren Porengröße von etwa 0,7 bis 1,2 nm, vorzugsweise etwa 0,9 nm auf, wobei die nanoporige Schicht eine mittlere Dicke zwischen 30 und 100 nm, vorzugsweise zwischen 40 und 70 nm, besonders bevorzugt zwischen 45 und 55 nm aufweist. Die beschriebene nanoporige Schicht ist auf einer keramischen Mittlerschicht, vorzugsweise aus TiO₂, mit einer mittleren Porengröße zwischen 3 und 10 nm, vorzugsweise zwischen 4 und 7 nm, besonders bevorzugt zwischen 5 und 6 nm, und mit einer mittleren Dicke von 300 -1000 nm, vorzugsweise 400 - 800 nm, besonders bevorzugt etwa 450 - 550 nm aufgetragen. Die Mittlerschicht ist wiederum auf einer Folge von Trägerschichten mit zunehmender Porengröße und zunehmender Dicke aufgetragen, die vorzugsweise Al₂O₃ aufweisen. Die grobporigste Trägerschicht, auf der die feinporigeren Trägerschichten aufbauen weist vorzugsweise eine mittlere Porengröße von einigen µm, vorzugsweise zwischen 2 und 10 µm besonders bevorzugt zwischen 2,5 und 5 µm und eine Dicke von einigen 100 µm bis etwa 2 mm auf.

Die trennaktiven Schichten werden vorzugsweise nach einem Sol-Gel-Verfahren hergestellt, wie es beispielsweise von Larbot et al im International Journal of High Technology Ceramics 3 (1987) Seiten 143-151 beschrieben ist.

Die Porengröße ist beim Sol-Gel-Verfahren sehr genau über die Hydrolyse- und Kondensationsbedingungen zu kontrollieren. Zudem ist die Brenntemperatur auf die angestrebte Porengröße abzustimmen, wie Larbot et al. dargelegt haben.

Geeignete Membranmaterialien sind auch kommerziell erhältlich von dem Hermsdorfer Institut für Technische Keramik bzw. der Inocermic GmbH. Andere geeignete Materialien werden unter der Marke KEMIHOFA® vertrieben.

Die hydrophoben Eigenschaften des Filtermaterials können durch geeignete Beschichtungen verbessert werden. Hierzu kann die Membran vorzugsweise mit einem organischen Lösungsmittel getränkt werden, welches eine hydrophobe Substanz in Lösung enthält. Wenngleich die Konzentration der Substanz nicht kritisch ist, so haben sich Konzentrationen zwischen 0,5 - 20 Gewichts-%, vorzugsweise etwa 0,5 - 10 Gewicht-%, besonders bevorzugt 0,5 - 5 Gewichts-% zur Hydrophobisierung als geeignet erwiesen.

Grundsätzlich sind beliebige hydrophobe Substanzen wie Wachse, aliphatische und aromatische Kohlenwasserstoffe, Silikone und Silikonharze geeignet. Bevorzugt sind u.a. Organosilane, insbesondere Silane der Formel R_{y}-Si-X_{4-y}, wobei R einen hydrophoben Rest, X eine hydrolysierbare Gruppe bezeichnet, und 1 ≤ y ≤ 3. Besonders bevorzugt sind Methylsilane, Phenylsilane, Octadecyltrichlorosilan, Di-(Dodecyl)-Difluorosilane und andere fluorhaltige Silane. Ebenfalls geeignet sind R_{y}-Zr-X_{4-y}, sowie R_{y}-Ti-X_{4-y}.

Die Imprägnierung wird begünstigt durch eine offene Porosität mit Porenweiten, die dem Trägermedium und dem Hydrophobierungsmittel das Eindringen gestatten. Ebenfalls günstig sind nicht vollständig verfestigte Schichten, deren Struktur beim Imprägnierschritt aufquillt.

Weitere Einzelheiten zu hydrophoben Beschichtungen sind beispielsweise in der britischen Patentanmeldung GB 2 014 868 A veröffentlicht.

Zudem kann hydrophobes Material auch durch Gasphasenabscheidung auf einer nanoporigen Schicht deponiert werden, um diese zu hydrophobisieren. Die Gasphasenabscheidung ist besonders dann geeignet, wenn Lösungsmittel, den Beschichtungsvorgang beeinträchtigen.

Anstelle der nachträglichen Imprägnierung des Filtermaterials mit einer hydrophoben Lösung kann bereits den Ausgangsstoffen eine hydrophobe Substanz beigemischt werden. Beispiele hierfür sind organisch / anorganische Hybridmaterialien wie Ormocere (nach dem Englischen: organic modified ceramics). Geeignete Ausgangsstoffe hierfür sind beispielsweise Tetraethylorthosilan und Methyltriethoxysilan.

Nanoporige Schichten auf Basis von pyrolysiertem Kohlenstoff bzw. auf Basis kolloidaler organischer, hydrophober Teilchen erfordern keine zusätzliche Hydrophobierung, da sie bereits an sich hinreichend hydrophob sind.

Ein nach den zuvor beschriebenen Prinzipien gestaltetes Filterelement gewährleistet, daß das in der Luft enthaltene Wasser auch bei Temperaturen oberhalb des Taupunkts von dem Filterelement ohne Beeinträchtigung des Druckausgleichs zwischen der Umgebungsluft und der Referenzdruckkammer zurückgehalten wird. Auf diese Weise kann der Wassergehalt der Luft in der Referenzdruckkammer so niedrig gehalten werden, daß auch bei tiefen Temperaturen, die unterhalb des Taupunktes der Umgebung des Sensors liegen, die relative Luftfeuchtigkeit in der Referenzdruckkammer langfristig unter 100% bleibt, so daß die Kondensation des Wassers vermieden werden kann.

Wenngleich das Filterelement an einer beliebigen Position des Referenzdruckpfades angeordnet sein kann, ist es bevorzugt, das Filterelement nahe der Oberfläche anzuordnen, die mit dem Referenzdruck beaufschlagbar ist, bzw. das Filterelement in diese Oberfläche zu integrieren.

Üblicherweise umfaßt ein Relativdrucksensor ein Gehäuse, in dem das Sensorelement angeordnet ist, und die Oberfläche, die mit dem Relativdruck beaufschlagbar ist, ist in diesem Falle vorzugsweise eine Oberfläche des Gehäuses.

In dem Gehäuse des Relativdrucksensors sind gewöhnlich in einem Gehäuseabschnitt elektronische Schaltungen zur Erzeugung eines Meßsignals angeordnet. Falls diese elektronischen Schaltungen mit der Umgebungsluft gekühlt und dabei vor Feuchte geschützt werden sollen, kann der Gehäuseabschnitt mit den elektronischen Schaltungen in den Referenzdruckpfad integriert werden. Auf diese Weise können die Schaltungen einerseits und die Referenzdruckkammer andererseits mit einem einzigen nanoporigen Filterelement trocken gehalten werden.

Die Erfindung wird nun anhand der beigefügten Zeichnungen beschrieben. Es zeigt:
Fig. 1 einen Längsschnitt durch einen erfindungsgemäßen Relativdrucksensor.
Fig.2 die Häufigkeitsverteilung der Porendurchmesser für das nanoporige Material eines bevorzugten Filterelements;
Fig. 3 die Sprungantwort eines erfindungsgemäßen Relativdrucksensors mit Filter auf einem Druckstoß im Vergleich zur Sprungantwort eines Relativdrucksensors ohne Filter sowie eine Überlagerung der beiden Sprungantwortkurven; und
Fig. 4 einen Längsschnitt durch ein Elektronikgehäuse gemäß der vorliegenden Erfindung.

Der erfindungsgemäße Relativdrucksensor umfaßt ein Gehäuse 10, in dessen Innenraum ein Sensorelement 20 mit einem vorzugsweise zylindrischen Aufbau angeordnet ist.

Das Sensorelement umfaßt einen Grundkörper 26, der mit einer Meßmembran 21 druckdicht verbunden ist, wobei zwischen der Meßmembran eine Referenzdruckkammer 22 ausgebildet ist. Eine erste Membranfläche ist dem Grundkörper 26 abgewandt und ist mit einem Meßdruck beaufschlagbar, der durch einen Anschluß 11 in einen Hohlraum 12 im Gehäuse einleitbar ist. Der Hohlraum wird von der Meßmembran 21 begrenzt, wobei zwischen einer Anschlagfläche des Gehäuses und der Meßmembran 21 vorzugsweise eine ringförmigen Dichtung 13 axial eingespannt ist, um den Hohlraum abzudichten.

Die druckabhängige Verformung der Meßmembran 21 wird durch geeignete Mittel, beispielsweise kapazitiv, resistiv oder induktiv detektiert und in ein Meßsignal gewandelt, welches über eine Leitung 27 aus dem Gehäuse geführt wird. Einzelheiten zur Umsetzung dieser Meßprinzipien sind dem Fachmann geläufig und brauchen hier nicht näher erläutert zu werden.

Die dem Grundkörper 26 zugewandte zweite Membranfläche der Meßmembran 21 ist mit dem Referenzdruck beaufschlagbar, welcher über eine Referenzdruckleitung 23 in die Referenzdruckkammer 22 geführt wird.

Die Referenzdruckleitung 23 wird vorzugsweise radial aus dem Gehäuse 10 geführt und mündet in einer Filterkammer 24, die zur Umgebungsluft eine Öffnung 25 aufweist. In der Filterkammer 24 ist ein membranartiges Filterelement 30 angeordnet, welches die gesamte Querschnittsfläche der Filterkammer 24 einnimmt. Das Filterelement ist in seinem Randbereich gasdicht mit der Filterkammer verbunden so daß sämtlicher Gastransport durch die Fläche des membranartigen Filterelements erfolgen muß.

Die Filterkammer weist vorzugsweise eine Abdeckung mit einem Gaseinlaß auf, um das Filterelement vor mechanischen Beschädigungen zu schützen. Wenngleich andere Anordnungen des Filterelements denkbar sind, so ist es grundsätzlich ratsam, das Filterelement konstruktiv vor mechanischen Belastungen zu schützen. Gleichermaßen ist das Filterelement vor aggressiven Reagenzien zu schützen, wenn der erfindungsgemäße Relativdrucksensor in der Umgebung solcher Substanzen zum eingesetzt wird.

Das Filterelement weist ein nanoporiges Material auf, welches mit einem hydrophoben Organosilan imprägniert ist.

Das Filterelement des Ausführungsbeispiels weist dabei die in der folgenden Tabelle 1 wiedergegebene Schichtstruktur auf.

**Tabelle 1**

| **Material** | **Schichtdicke** | **Mittlere Porengröße** |
|---|---|---|
| TiO₂ | 0,05 µm | 0,9 nm |
| TiO₂ | 0,5 µm | 5 nm |
| Al₂O₃ | 10 - 20 µm | 60 nm |
| Al₂O₃ | 10 - 20 µm | 200 nm |
| Al₂O₃ | 100 µm | 1 µm |
| Al₂O₃ | Träger bzw. Support 400 - 600 µm | 3 µm |

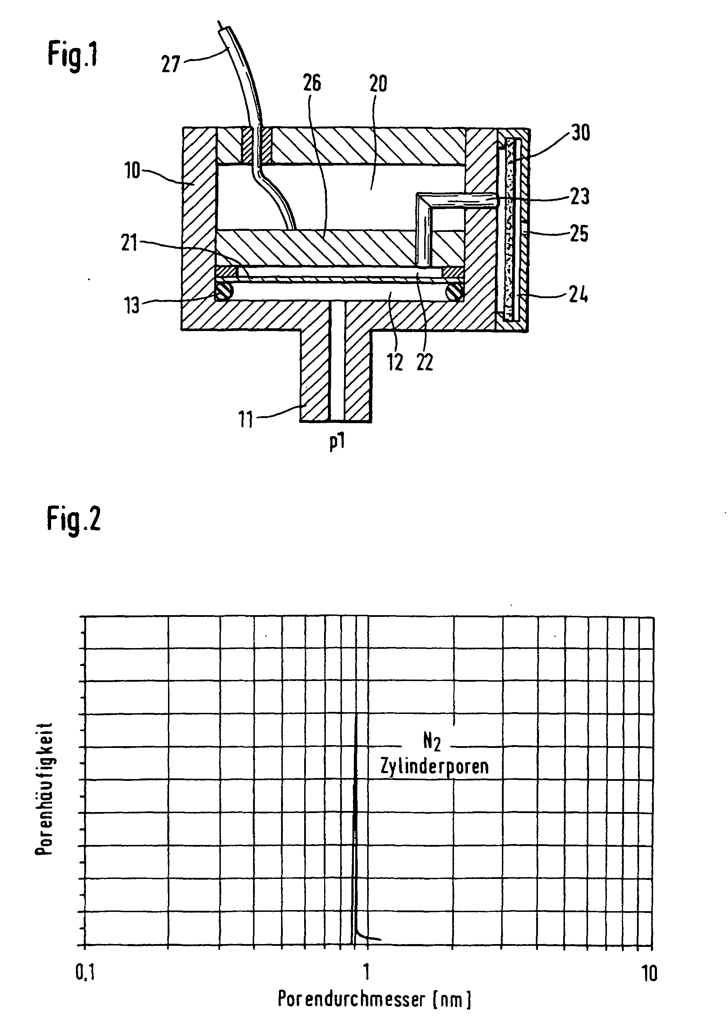

Die Porengrößenverteilung des Filterelements mit einer mittleren Porengröße von 0,9 nm ist in Fig. 2 dargestellt. Aufgrund der sehr schmalen Porengrößenverteilung ist für das gesamte Filterelement eine homogene Filterwirkung zu erwarten.

Zur Überprüfung ob ein Filterelement das Einlaufverhalten des erfindungsgemäßen Relativdrucksensors beeinträchtigt, wurde ein Relativdrucksensor mit einem Nenndruckbereich von 400 mbar mit einem Überlastdruck von 6 bar beaufschlagt. Die Sprungantwort nach einer möglichst schnellen Druckentlastung wurde jeweils mit einem Filterelement und ohne ein Filterelement gemessen. Der Relativdrucksensor hatte bei dieser Ausführungsform ein Innenvolumen von etwa 20 mm³ ohne Druckbeaufschlagung. Das Innenvolumen bei Druckbeaufschlagung mit Überlast betrug etwa 7 mm³. Das heißt, es mußte ein Gasvolumen von etwa 13 mm³ bei Normaldruck durch das Filterelement strömen, um den Gleichgewichtszustand nach der Druckentlastung zu erreichen.

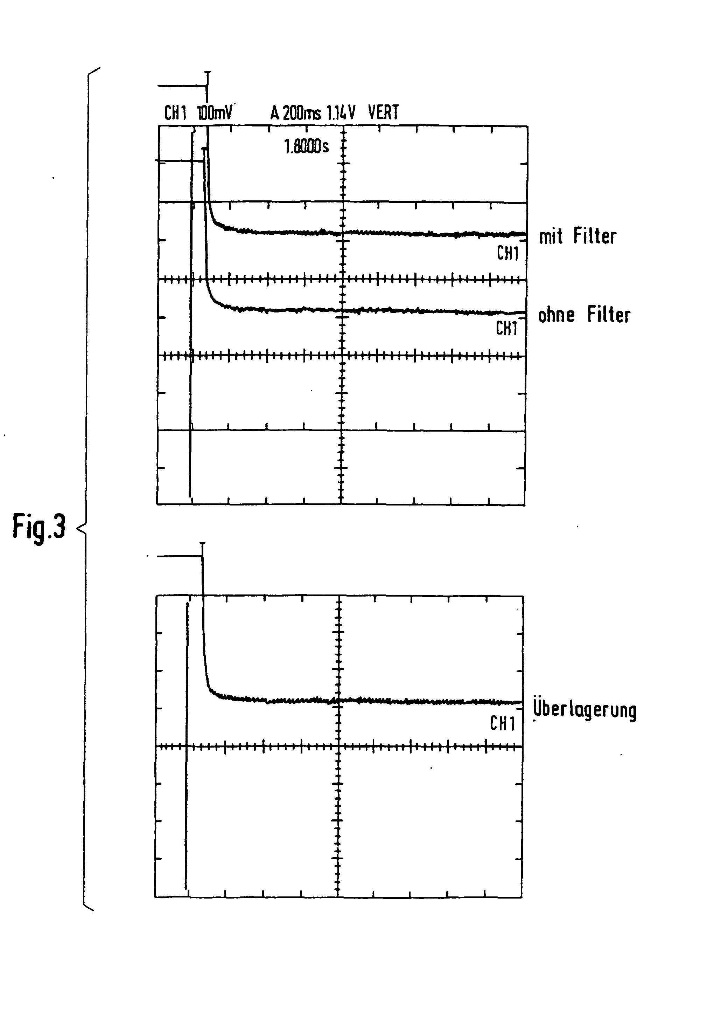

Repräsentative Ergebnisse der Messungen sind in Fig. 3 wiedergegeben. Hierbei zeigt die obere Kurve im oberen Diagramm die Sprungantwort mit Filter und die untere Kurve im oberen Diagramm die Sprungantwort ohne Filter. Das untere Diagramm zeigt eine Überlagerung der beiden Kurven, wobei die beiden Kurven im wesentlichen identisch verlaufen. Hieraus folgt, daß die Sprungantwort vom Filterelement praktisch nicht beeinträchtigt wird.

Die Einlaufzeit betrug mit und ohne Filterelement 210 ms, wobei das Ausgangssignal nach dieser Einlaufzeit in einem Fehlerband von +/- 0,25% lag. Es waren keinerlei Nachlaufeffekte über eine Meßzeit von etwa 10 sec festzustellen.

Im Ergebnis wird die Meßgenauigkeit und die Einlaufzeit des Relativdrucksensors auf Druckschwankungen in keiner Weise durch das Filterelement beeinträchtigt.

Bei der Fertigung des erfindungsgemäßen Relativdrucksensors ist darauf zu achten, daß die Referenzdruckkammer 24 absolut trocken ist, denn aufgrund der Filterfunktion könnte in der Referenzdruckkammer enthaltene Feuchtigkeit nicht entweichen.

Das Sensorelement des erfindungsgemäßen Relativdrucksensors kann insbesondere ein kapazitives, ein resistives oder ein induktives Sensorelement sein, die Erfindung ist aber unabhängig von dem gewählten Meßprinzip mit jedem Sensorelement realisierbar.

Grundsätzlich sind beliebige Anordnungen für den Relativdrucksensor möglich. So kann die erste Membranfläche der Meßmembran direkt mit dem Meßmedium in Kontakt gebracht werden, oder es kann ein Trennkörper mit einer Trennmembran vorgesehen sein, wobei die Trennmembran mit dem Meßmedium in Kontakt kommt, und der an der Meßmembran anstehende Druck hydraulisch zur ersten Membranfläche der Meßmembran übertragen wird. Die hierzu erforderlichen Maßnahmen sind dem Fachmann geläufig und brauchen hier nicht eingehend erläutert zu werden.

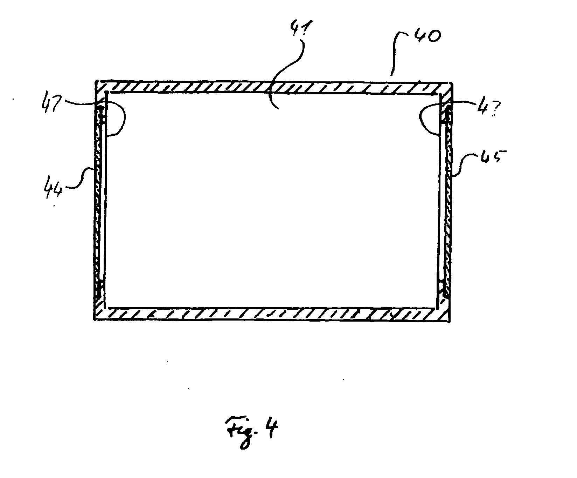

Fig. 4 zeigt schließlich ein erfindungsgemäßes Elektronikgehäuse 40, welches in seinem inneren eine Kammer 41 definiert. die Kammer weist eine erste Öffnung 42 und eine zweite Öffnung 43 auf, über welche die Kammer mit der Gehäuseumgebung kommuniziert. In der ersten und in der zweiten Gehäuseöffnung ist jeweils ein Filterelement 44, 45 angeordnet, welches eine nanoporige hydrophobe bzw. hydrophobierte Membran aufweist. Hinsichtlich der Einzelheiten der Filterelemente wird auf die weiter oben gegebene Beschreibung der Filterelemente der erfindungsgemäßen Relativdrucksensoren verwiesen. Die dort beschriebenen Filterelemente sind ohne Einschränkung ebenfalls für das erfindungsgemäße Elektronikgehäuse geeignet.

Optional kann ein Gebläse vorgesehen werden um den Gasfluß durch die Kammer 41 zu erhöhen. Dies kann insbesondere dann erforderlich sein, wenn die Abwärme der (hier nicht dargestellten) elektronischen Komponenten im Gehäuse durch wärmebedingte Konvektion nicht abtransportiert werden kann.

Weitere Einzelheiten zur Dimensionierung der Filterelemente bei einer gegebenen Gehäusegröße bzw. einer erforderlichen Kühlleistung ergeben sich aus dem fachmännischen Können, ohne daß darauf im Detail eingegangen werden müßte.
¹ Although not indicated in the claims as granted, Vycor is a registered trademark.

## Patentansprüche

1. Relativdrucksensor zur Erfassung eines Meßdrucks bezogen auf einen Referenzdruck umfassend:
ein Sensorelement (20) mit
einem Grundkörper (26) und
einer Meßmembran (21), die entlang ihres Randbereichs unter Bildung einer Referenzdruckkammer (22) druckdicht mit dem Grundkörper (26) verbunden ist, wobei
die Meßmembran eine erste Membranfläche aufweist, die von der Referenzdruckkammer (22) abgewandt und mit dem Meßdruck beaufschlagbar ist, und eine zweite Membranfläche, die der Referenzdruckkammer (22) zugewandt ist;
einen Referenzdruckpfad (23), der sich zwischen einer Oberfläche, die mit dem Referenzdruck beaufschlagbar ist, und einer Öffnung in der Referenzdruckkammer (22) erstreckt, wodurch die zweite Membranfläche mit dem Referenzdruck beaufschlagbar ist; und
ein Filterelement (30), welches in dem Referenzdruckpfad (23) angeordnet ist;
**dadurch gekennzeichnet,**
**daß** das Filterelement (30) hydrophobes oder hydrophobiertes nanoporiges Material mit einen mittleren Porendurchmesser unter 4 nm umfaßt.

2. Relativdrucksensor nach Anspruch 1, wobei das nanoporige Material als Schicht auf einem Trägermaterial bzw. in der Matrix eines porösen Trägermaterials angeordnet ist.

3. Relativdrucksensor nach Anspruch 1 oder 2 wobei das nanoporige Material eine der Substanzen Al₂O₃ , TiO₂, ZrO₂, B₂O₃, CeO₂, Mullit, Zeolith, Silikate insbesondere Alumosilikate, Alumoberylsillkate, Apatit, oder Cordierit, Phosphate, SiC, Si₃N₄, Kohlenstoff, Vycor Glass oder Mischungen-dieser Substanzen aufweist.

4. Retativdrucksensor nach Anspruch 1 oder 2, wobei das nanoporige Material ein Ormocer oder ein anorganisches Polymer, insbesondere Silikonharz, Polycarbosilane, oder Polycarbosilazane umfaßt.

5. Relativdrucksensor nach einem der Ansprüche 1 bis 4, wobei das nanoporige Material einen mittleren Porendurchmesser unter 2,5 nm, weiter bevorzugt zwischen 0,4 und 2 nm, noch weiter bevorzugt zwischen 0,5 und 1,5 nm und besonders bevorzugt zwischen 0,7 und 1 nm aufweist.

6. Relativdrucksensor nach einem der vorhergehenden Ansprüche wobei, das nanoporige Material mit einer hydrophoben Schicht belegt ist

7. Relativdrucksensor nach Anspruch 6, wobei die hydrophobe Schicht mindestens ein Organosilan aufweist.

8. Vorrichtung mit:
einem Gehäuse (40), das in seinem Inneren eine Kammer (41) definiert, welche mindestens eine Öffnung (42, 43) aufweist, durch welche die Kammer über einen Gasaustauschpfad mit der Umgebung des Gehäuses 40 in Fließverbindung steht; und mindestens einem Filterelement (44, 45), welches in dem Gasaustauschpfad angeordnet ist, **dadurch gekennzeichnet, daß** das mindestens eine Filterelement (44, 45) ein hydrophobes oder hydrophobiertes nanoporiges Material mit einem mittleren Porendurchmesser unter 4 nm aufweist.

9. Vorrichtung nach Anspruch 8, wobei die Kammer (41) eine Einlaßöffnung (44) und eine Auslaßöffnung (45) aufweist, durch welche die Kammer (41) über jeweils einen Gasaustauschpfad mit der Umgebung des Gehäuses (40) in Fließverbindung steht, wobei ferner in beiden Gasaustauschpfaden jeweils ein Filterelement (44, 45) angeordnet ist, welches ein hydrophobes oder hydrophobiertes nanoporiges Material aufweist.

10. Vorrichtung nach Anspruch 9, wobei die Vorrichtung ein Gebläse aufweist, um einen Luftstrom durch die Einlaßöffnung und die Auslaßöffnung zu bewirken.

## Claims

1. A relative pressure sensor for determining a pressure to be measured relative to a reference pressure, comprising:
a sensor element (20) having
a main body (26) and
a measuring diaphragm (21) connected along its edge region to the main body (26) in a pressure-tight manner to form a reference pressure chamber (22),
wherein
the measuring diaphragm has a first diaphragm surface which is remote from the reference pressure chamber (22) and can be acted upon by the pressure to be measured, and a second diaphragm surface which faces the reference pressure chamber (22);
a reference pressure path (23) extending between an outer surface, which can be acted upon by the reference pressure, and an opening in the reference pressure chamber (22), by means of which the second diaphragm surface can be acted upon by the reference pressure; and
a filter element (30) arranged in the reference pressure path (23);
**characterised in that**
the filter element (30) comprises hydrophobic or hydrophobicised nanoporous material with an average pore diameter of less than 4 nm.

2. A relative pressure sensor according to claim 1, wherein the nanoporous material is arranged as a layer on a supporting material or in the matrix of a porous supporting material.

3. A relative pressure sensor according to claim 1 or 2, wherein the nanoporous material contains one of the substances Al₂O₃, TiO₂, ZrO₂, B₂O₃, CeO₂, mullite, zeolite, silicates, in particular aluminosilicates, beryllium aluminium silicates, apatite or cordierite, phosphates, SiC, Si₃N₄, carbon, Vycor¹ glass or mixtures of these substances.

4. A relative pressure sensor according to claim 1 or 2, wherein the nanoporous material comprises an ormocer or an inorganic polymer, in particular silicone resin, polycarbosilanes or polycarbosilazanes.

5. A relative pressure sensor according to any one of claims 1 to 4, wherein the nanoporous material has an average pore diameter of less than 2.5 nm, preferably between 0.4 and 2 nm, more preferably between 0.5 and 1.5 nm and especially preferably between 0.7 and 1 nm.

6. A relative pressure sensor according to any one of the preceding claims, wherein the nanoporous material is covered with a hydrophobic layer.

7. A relative pressure sensor according to claim 6, wherein the hydrophobic layer contains at least one organosilane.

8. A device comprising:
a housing (40) which in its interior forms a chamber (41) having at least one opening (42, 43), by means of which the chamber is fluidically connected to the environment of the housing (40) via a gas-exchange path; and at least one filter element (44, 45) arranged in the gas-exchange path, **characterised in that** the at least one filter element (44, 45) comprises a hydrophobic or hydrophobicised nanoporous material with an average pore diameter of less than 4 nm.

9. A device according to claim 8, wherein the chamber (41) has an inlet opening (44) and an outlet opening (45), by means of which the chamber (41) is fluidically connected to the environment of the housing (40) via a respective gas-exchange path, and wherein a filter element (44, 45) comprising a hydrophobic or hydrophobicised nanoporous material is arranged in each of the two gas-exchange paths.

10. A device according to claim 9, wherein the device has a fan for creating an air flow through the inlet opening and the outlet opening.

## Revendications

1. Capteur de pression relative pour déterminer une pression de mesure en fonction d'une pression de référence, lequel comprend :
un élément capteur (20) avec
un corps de base (26) et
une membrane de mesure (21) qui est reliée de façon étanche à la pression avec le corps de base (26) le long de sa zone de bord en formant une chambre de pression de référence (22), où
la membrane de mesure présente une première surface de membrane, qui est détournée de la chambre de pression de référence (22) et qui est chargée avec la pression de mesure, et une deuxième surface de membrane qui est orientée vers la chambre de pression de référence (22);
Un chemin de pression de référence (23) qui est appliquée entre une surface supérieure, Avec la pression de référence et une ouverture dans laquelle s'étend la chambre de pression de référence (22) ; la deuxième surface de membrane étant appliquée avec la pression de référence; et
Un élément de filtre (30) qui est disposé dans le chemin de pression de référence (23);
**caractérisé en ce que**,
l'élément de filtre (30) comprend un matériau hydrophobe ou rendu hydrophobe nanoporeux avec un diamètre extérieur de pores moyen en dessous de 4nm.

2. Capteur de pression relative selon la revendication 1, où le matériau nanoporeux est disposé en tant que couche sur le matériau porteur, respectivement dans la matrice d'un matériau porteur poreux.

3. Capteur de pression relative selon la revendication 1 ou 2, où le matériau nanoporeux présente une des substances Al₂O₃, TiO2, B2O3, CeO2, du mullite , du zéolithe , du silicate, notamment de l'aluminosilicate, de l'alumoberylsilicate, de l'apatite ou du cordiérite, du phosphate, du SiC, du Si3N4, du carbone , du Vycor Glass ou des mélanges de ces substances.

4. Capteur de pression relative selon la revendication 1 ou 2, où le matériau nanoporeux est un "Ormocer" ou un polymère anorganique, notamment une résine en silicone, du polycarbosilane, ou du polycarbosilazane.

5. Capteur de pression relative selon la revendication 1 à 4, où le matériau nanoporeux présente un diamètre de pores moyen en dessous de 2,5 nm, de préférence entre 0,4 et 2nm, de façon encore plus préférée entre 0,5 et 1,5 nm et particulièrement préféré entre 0,7 et 1 nm.

6. Capteur de pression relative selon une des revendications précédentes, où le matériau nanoporeux recouvert d'une couche hydrophobe.

7. Capteur de pression relative selon la revendication 6, où la couche hydrophobe présente au moins un organosilane .

8. Dispositif avec :
un boîtier (40) qui définit dans son intérieur , une chambre (41) qui présente au moins une ouverture (42 43) par laquelle la chambre se trouve dans une liaison à écoulement avec l'environnement du boîtier 40 par un chemin d'échange de gaz, et avec au moins un élément de filtre (44, 45) qui est disposé dans le chemin de passage de gaz (44, 45), **caractérisé en ce qu'**au moins un élément de filtrage (44, 45) comporte un matériau nanoporeux hydrophobe ou rendu hydrophobe avec un diamètre de pores moyen en dessous de 4 nm.

9. Dispositif selon la revendication 8, où une chambre (41) présente une ouverture d'entrée (44) et une ouverture de sortie (45) par lesquelles, la chambre (41) est en liaison à écoulement grâce à un chemin d'échange de gaz avec l'environnement du boîtier (40) ; un élément de filtrage (44, 45) étant disposé à chaque fois, en outre, dans les deux chemins d'échange de gaz, lequel présente un matériau nanoporeux hydrophobe ou rendu hydrophobe.

10. Dispositif selon la revendication 9, où le dispositif présente une soufflerie pour générer un courant d'air par l'ouverture d'entrée et l'ouverture de sortie.
